(19) **Europäisches Patentamt / European Patent Office / Office européen des brevets**

(11) **EP 4 394 754 A1**

(12) **EUROPEAN PATENT APPLICATION**
published in accordance with Art. 153(4) EPC

(43) Date of publication:
**03.07.2024 Bulletin 2024/27**

(21) Application number: **23798869.6**

(22) Date of filing: **09.11.2023**

(51) International Patent Classification (IPC):
*G09G 3/3208* (2016.01)   *H02M 1/00* (2006.01)
*H02M 3/158* (2006.01)

(86) International application number:
**PCT/KR2023/017974**

(87) International publication number:
**WO 2024/101917 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.11.2022  KR 20220149064
15.12.2022  KR 20220176126**

(71) Applicant: **Samsung Electronics Co., Ltd.
Suwon-si, Gyeonggi-do 16677 (KR)**

(72) Inventors:
- **CHOI, Hangseok
  Suwon-si, Gyeonggi-do 16677 (KR)**
- **YUN, Chuleun
  Suwon-si, Gyeonggi-do 16677 (KR)**

(74) Representative: **HGF
HGF Limited
1 City Walk
Leeds LS11 9DX (GB)**

(54) **ELECTRONIC DEVICE COMPRISING DISPLAY AND OPERATION METHOD THEREOF**

(57)    An electronic device according to an embodiment may include a battery, a display including a display panel, a converter circuit configured to generate a negative bias voltage applied to the display panel, wherein the converter circuit may include a charge pump including a first capacitor, a second capacitor, and a plurality of switches, and an LC filter circuit connected to the charge pump, and a control circuit. The control circuit according to an embodiment may be configured to control the plurality of switches included in the charge pump to apply, to the LC filter circuit, in a switching period of the plurality of switches, one of a voltage having a magnitude of zero, a second voltage having an opposite sign of a first voltage provided from the battery and a magnitude equal to a magnitude of the first voltage, or a third voltage having the opposite sign of the first voltage and a magnitude converted to twice the magnitude of the first voltage. The control circuit according to an embodiment may be configured to control the converter circuit to supply a negative bias voltage to the display panel based on applying the voltage having the magnitude of zero, the second voltage, or the third voltage to the LC filter circuit. Various other embodiments are also applicable.

FIG. 3B

# Description

## [Technical Field]

Various embodiments of the disclosure relate to an electronic device including a display and a method of operating the same.

## [Background Art]

An electronic device may provide a variety of screens on a display. To provide a natural image or screen, the electronic device may include an organic light emitting diode (OLED) display as well as a liquid crystal display (LCD).

The OLED display may receive panel driving voltages (e.g., ELVDD and ELVSS) from a power management integrated circuit (PMIC), for driving. For example, ELVDD may be a positive bias voltage to drive a display panel included in the OLED display. ELVSS may be a negative bias voltage to drive the display panel included in the OLED display.

To generate the panel driving voltages, the electronic device may include a converter circuit for converting a voltage. Various types of converter circuits are available to efficiently generate the panel driving voltages.

## [Disclosure of Invention]

## [Solution to Problems]

An electronic device according to an embodiment includes a battery, a display including a display panel, a converter circuit configured to generate a negative bias voltage applied to the display panel, wherein the converter circuit includes a charge pump including a first capacitor, a second capacitor, and a plurality of switches, and an LC filter circuit connected to the charge pump, and a control circuit. The control circuit according to an embodiment is configured to control the plurality of switches included in the charge pump to apply, to the LC filter circuit, in a switching period of the plurality of switches, one of a voltage having a magnitude of zero, a second voltage having an opposite sign of a first voltage provided from the battery and a magnitude equal to a magnitude of the first voltage, or a third voltage having the opposite sign of the first voltage and a magnitude converted to twice the magnitude of the first voltage. The control circuit according to an embodiment is configured to control the converter circuit to supply a negative bias voltage to the display panel based on applying the voltage having the magnitude of zero, the second voltage, or the third voltage to the LC filter circuit.

A method of operating an electronic device wherein the electronic device includes a battery, a display including a display panel, and a converter circuit including a charge pump including a first capacitor, a second capacitor, and a plurality of switches, and an LC filter circuit connected to the charge pump according to an embodiment includes controlling the plurality of switches included in the charge pump to apply, to the LC filter circuit, in a switching period of the plurality of switches, one of a voltage having a magnitude of zero, a second voltage having an opposite sign of a first voltage provided from the battery and a magnitude equal to a magnitude of the first voltage, or a third voltage having the opposite sign of the first voltage and a magnitude converted to twice the magnitude of the first voltage. The method of operating the electronic device according to an embodiment includes controlling the converter circuit to supply a negative bias voltage to the display panel based on applying the voltage having the magnitude of zero, the second voltage, or the third voltage to the LC filter circuit.

## [Brief Description of Drawings]

FIG. 1 is a block diagram illustrating an electronic device in a network environment according to various embodiments.

FIG. 2 is a block diagram illustrating a configuration of an electronic device according to an embodiment.

FIG. 3A is a diagram illustrating a first converter circuit including an inverting buckbooster according to a comparative embodiment.

FIG. 3B is a diagram illustrating a first converter circuit for generating an ELVSS voltage according to an embodiment.

FIG. 4 is a flowchart illustrating an operation of supplying an ELVSS voltage to a display panel according to an embodiment.

FIG. 5A is a diagram illustrating an operation of controlling a plurality of switches in a first operation mode according to an embodiment.

FIG. 5B is a diagram illustrating an operation of controlling a plurality of switches in a second operation mode according to an embodiment.

FIG. 5C is a diagram illustrating an operation of controlling a plurality of switches in a third operation mode according to an embodiment.

FIG. 6A is a diagram illustrating an operation of applying a voltage of 0V is applied to an LC filter circuit in a first operation mode according to an embodiment.

FIG. 6B is a diagram illustrating an operation of applying a second voltage to an LC filter circuit in a second operation mode according to an embodiment.

FIG. 6C is a diagram illustrating an operation of applying a third voltage to an LC filter circuit in a third operation mode according to an embodiment.

FIG. 7 is a flowchart illustrating a method of applying at least one of a second voltage or a third voltage to an LC filter circuit to supply an ELVSS voltage to a display panel according to an embodiment.

FIG. 8 is a flowchart illustrating a method of controlling a plurality of switches, when an ELVSS voltage is less than a first threshold according to an embodiment.

FIG. 9 is a flowchart illustrating a method of controlling a plurality of switches, when an ELVSS voltage is not less than a first threshold and less than a second threshold according to an embodiment.

FIG. 10 is a flowchart illustrating a method of controlling a plurality of switches, when an ELVSS voltage is not less than a second threshold according to an embodiment.

FIG. 11 is graphs referred to for describing an operation of applying at least one of a second voltage or a third voltage to an LC filter circuit to supply an ELVSS voltage to a display panel according to an embodiment.

FIG. 12 is a flowchart illustrating a method of determining a duty ratio for each of a first operation mode, a second operation mode, and a third operation mode according to an embodiment.

**[Mode for the Invention]**

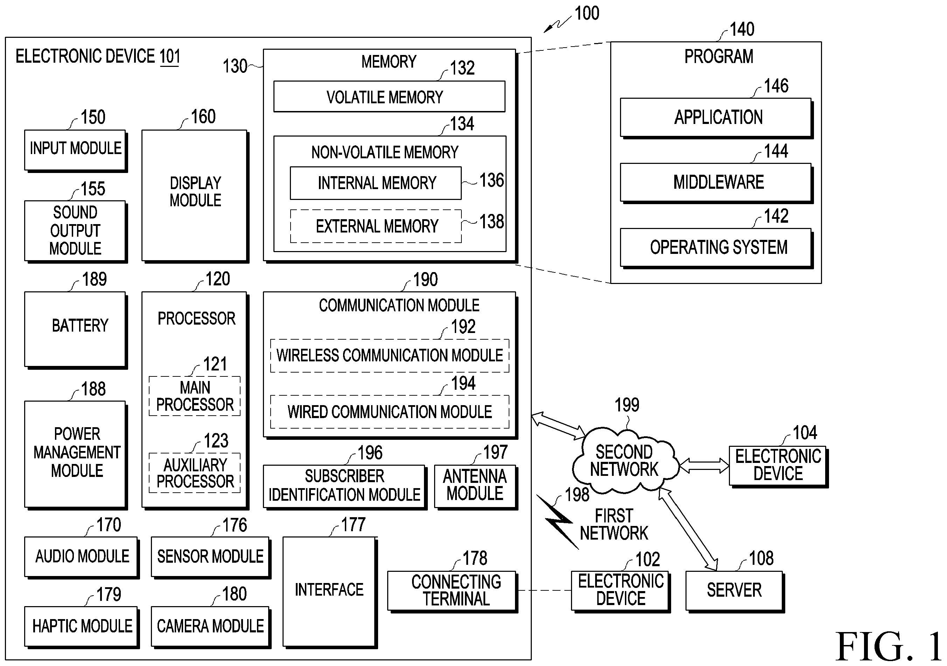

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

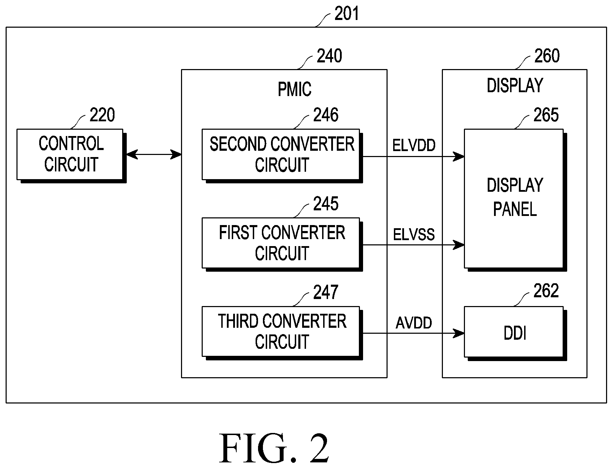

FIG. 2 is a block diagram illustrating a configuration of an electronic device according to an embodiment.

Referring to FIG. 2, an electronic device 201 may include a control circuit 220, a PMIC 240, and a display 260. For example, the electronic device 201 may be implemented identically or similarly to the electronic device 101 of FIG. 1.

According to an embodiment, the display 260 (e.g., the display module 160 of FIG. 1) may include a display driver IC (DDI) 262 and a display panel 265. For example, the display 260 may be implemented as an organic light emitting diode (OLED) display.

According to an embodiment, the DDI 262 may control the operation of the display panel 265. The DD 1 262 may receive an AVDD voltage from the PMIC 240, for driving.

According to an embodiment, the display panel 265 may receive panel driving voltages (e.g., ELVDD and ELVSS) from the PMIC 240, for driving. For example, the display panel 265 may be implemented as an OLED display panel.

According to an embodiment, the control circuit 220 may provide overall control to the operation of the PMIC 240. Although the control circuit 220 is shown in FIG. 2 as residing outside the PMIC 240, it may be included inside the PMIC 240 depending on implementation. Depending on implementation, the control circuit 220 may be implemented as a micro controller unit (MCU) or an application processor (AP). For example, the control circuit 220 may be implemented identically or similarly to the processor 120 of FIG. 1.

According to an embodiment, the control circuit 220 may identify a target ELVDD voltage and a target ELVSS voltage to be supplied to the display panel 265 through the PMIC 240. For example, the ELVDD voltage may refer to a positive bias voltage supplied to the display panel 265 to drive the display panel 265. The ELVSS voltage may refer to a negative bias voltage supplied to the display panel 265 to drive the display panel 265. For example, the target ELVDD voltage and the target ELVSS voltage may be determined by the control circuit 220 or a processor (not shown) (e.g., the processor 120 of FIG. 1) included in the electronic device 201.

According to an embodiment, the control circuit 220 may identify a target AVDD voltage to be supplied to the DDI 260 through the PMIC 240. For example, the AVDD voltage may refer to a voltage supplied to the DDI 262 to drive the DDI 262.

According to an embodiment, the PMIC 240 (e.g., the power management module 188 of FIG. 1) may include a first converter circuit 245, a second converter circuit 246, and a third converter circuit 247. For example, the PMIC 240 may supply power to the display 260 under the control of the control circuit 220.

According to an embodiment, the first converter circuit 245 may generate a negative bias voltage (or ELVSS voltage) to be applied to the display panel 265. For example, the first converter circuit 245 may function as a direct current-direct current (DC-DC) converter. For example, the first converter circuit 245 may include a charge pump (or charging pump) and an LC filter circuit. For example, the charge pump may include a plurality of capacitors and a plurality of switches. The LC filter circuit may include an inductor and a capacitor. For example, the first converter circuit 245 may convert a DC voltage applied through a power source (e.g., an internal battery (not shown) of the electronic device 201 or an external power source (not shown)) to the ELVSS voltage (or the target ELVSS voltage). The first converter circuit 245 may supply or output the ELVSS voltage to the display panel 265.

According to an embodiment, the second converter circuit 246 may generate a positive bias voltage (or ELVDD voltage) to be applied to the display panel 265. For example, the second converter circuit 246 may function as a DC-DC converter. For example, the second converter circuit 246 may be implemented as a booster converter (e.g., a buck-booster converter). For example, the second converter circuit 246 may convert a DC voltage applied through the power source (e.g., the internal battery (not shown) of the electronic device 201 or the external power source (not shown)) to the ELVDD voltage (or the target ELVDD voltage). The second converter circuit 246 may supply or output the ELVDD voltage to the display panel 265.

According to an embodiment, the third converter circuit 247 may generate an AVDD voltage. For example, the third converter circuit 247 may function as a DC-DC converter. For example, the third converter circuit 247 may convert a DC voltage applied through the power source (e.g., the internal battery of the electronic device 201 (not shown) or the external power source (not shown)) to the AVDD voltage (or the target ELVDD voltage). The third converter circuit 247 may supply or output the AVDD voltage to the DDI 262.

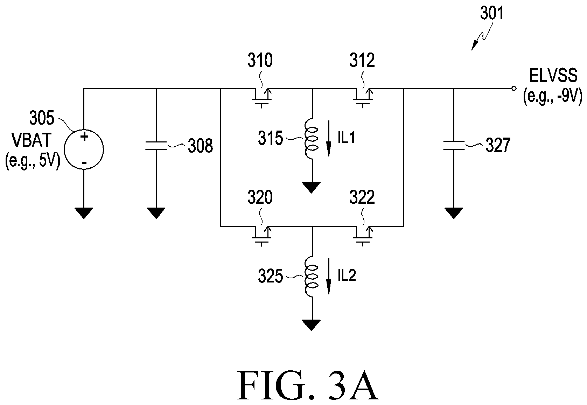

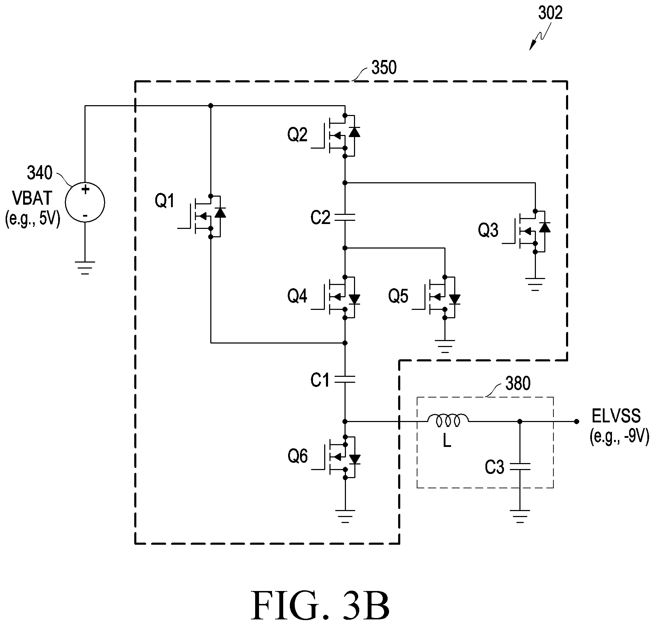

Traditionally, the first converter circuit 245 that generates the ELVSS voltage may be implemented as an inverting buckbooster, as illustrated in FIG. 3A below. However, the first converter circuit 245 according to an embodiment of the disclosure may be configured as illustrated in FIG. 3B.

FIG. 3A is a diagram illustrating a first converter circuit including an inverting buckbooster according to a comparative embodiment.

Referring to FIG. 3A, a first converter circuit 301 (e.g., the first converter circuit 245 of FIG. 2) may be implemented as an inverting buckbooster according to a comparative embodiment.

According to a comparative embodiment, the inverting buckbooster may include an input power source 305, a plurality of capacitors 308 and 327, a plurality of transistors 310, 312, 320, and 322, and a plurality of inductors 315 and 325.

According to the comparative embodiment, the inverting buckbooster may output a negative ELVSS voltage (e.g., -9 V) based on a positive input voltage VIN (e.g., 5V). In this case, a current IL1 or IL2 may be conducted through each of the plurality of inductors 315 and 325. However, the magnitude (e.g., 2.05A) of the current IL1 or IL2 applied to each of the plurality of inductors 315 and 325 may be greater than the magnitude (e.g., 0.75A) of an output current of the inverting buckbooster. For example, the total magnitude of the currents IL1 and II,2 conducted through the plurality of inductors 315 and 325 may be 4.1A. Therefore, the plurality of inductors 315 and 325 may be designed to be large and capable of withstanding high currents. Further, the difference (e.g., 14V) between the input voltage VIN (e.g., 5V) and the ELVSS voltage (e.g., -9V) may be applied to the transistor 312 or 322 disposed between the inductor 315 or 325 and an output terminal. Accordingly, the transistors 312 and 322 disposed between the inductors 315 and 325 and the output terminal may be designed as high voltage-resistant devices to withstand the voltage difference.

Accordingly, there may be a need for a converter circuit which may reduce the magnitude of currents conducted through the plurality of inductors 315 and 325 and reduce the magnitude of voltages applied to the transistors 312 and 322.

FIG. 3B is a diagram illustrating a first converter circuit for generating an ELVSS voltage according to an embodiment.

Referring to FIG. 3B, a first converter circuit 302 (e.g., the first converter circuit 245 of FIG. 2) may include a charge pump 350 and an LC filter circuit 380 according to an embodiment. For example, the first converter circuit 302 of FIG. 3B may not include an inverting buckbooster, unlike FIG. 3A.

According to an embodiment, the charge pump 350 may include a first capacitor C1, a second capacitor C2, and a plurality of switches Q1, Q2, Q3, Q4, Q5, and Q6. For example, each of the first capacitor C1 and the second capacitor C2 may be implemented as a flying capacitor. For example, each of the plurality of switches Q1, Q2, Q3, Q4, Q5, and Q6 may be implemented as a transistor (e.g., a field effect transistor (FET)).

According to an embodiment, an input power source 340 may supply power of a first voltage VBAT to the charge pump 350. That is, the charge pump 350 may be configured to receive a first voltage VBAT from an input power source. For example, the input power source 340 may be a battery included in the electronic device 201 or an external power source.

According to an embodiment, the first switch Q1 of the plurality of switches Q1, Q2, Q3, Q4, Q5, and Q6 may be connected between the input power source 340 and one end of the first capacitor C1. That is, the first switch Q1 may be connected between a first terminal of the first capacitor C1 and a first terminal of the charge pump 350, wherein the first terminal of the charge pump 350 is configured to connect (or be connectable) to the input power source 340 to receive the first voltage VBAT from the input power source 340. The second switch Q2 of the plurality of switches Q1, Q2, Q3, Q4, Q5, and Q6 may be connected between the input power source 340 and one end of the second capacitor C2. That is, the second switch Q2 may be connected between a first terminal of the second capacitor C2 and the first terminal of the charge pump 350. The third switch Q3 of the plurality of switches Q1, Q2, Q3, Q4, Q5, and Q6 may be connected between the one end of the second capacitor C2 and a ground. That is, the third switch Q3 may be connected between the first terminal of the second capacitor C2 and a ground (e.g. a terminal of the charge pump 350 that is connected to, or is configured to be connectable to, a ground). The fourth switch Q4 of the plurality of switches Q1, Q2, Q3, Q4, Q5, and Q6 may be connected between the other end of the second capacitor C2 and the one end of the first capacitor C1. That is, the fourth switch Q4 may be connected between the first terminal of the first capacitor C1 and a second terminal of the second capacitor C2. The fifth switch Q5 of the plurality of switches Q1, Q2, Q3, Q4, Q5, and Q6 may be connected between the other end of the second capacitor C2 and the ground. That is, the fifth switch Q5 may be connected between the second terminal of the second capacitor C2 and the ground (e.g. a terminal of the charge pump 350 that is connected to, or is configured to be connectable to, a ground). The sixth switch Q6 of the plurality of switches Q1, Q2, Q3, Q4, Q5, and Q6 may be connected between the other end of the first capacitor C1 and the ground. That is, the sixth switch Q6 may be connected between a second terminal of the first capacitor C1 and the ground (e.g. a terminal of the charge pump 350 that is connected to, or configured to be connectable to, a ground).

According to an embodiment, the LC filter circuit 380 may include an inductor L and a third capacitor C3. For example, the LC filter circuit 380 may be implemented as a low pass filter. For example, one end of the inductor L may be connected to the other end of the first capacitor C1 and the sixth switch Q6. That is, a first terminal of the inductor L may be connected to a first terminal of the LC filter circuit 380, wherein the first terminal of the LC filter circuit 380 is configured to connect (or be connectable to) a second terminal of the charge pump 350, the second terminal of the charge pump 350 being connected to a point between the second terminal of the first capacitor C1 and the sixth switch Q6. The other end of the inductor L may be connected to the third capacitor C3 and the display panel 265 (e.g., a cathode of a transistor included in the display panel). One end of the third capacitor C3 may be connected to the other end of the inductor L and the display panel 265. The other end of the third capacitor C3 may be connected to the ground. That is, a second terminal of the inductor L may be connected to a second terminal of the LC filter circuit 380, wherein the second terminal of the LC filter circuit 380 is configured to connect (or be connectable to) the display panel 265, a first terminal of the third capacitor C3 may be connected to a point between the inductor L and the second terminal of the LC filter circuit 380, and a second terminal of the third capacitor C3 is connected to the ground (e.g. a terminal of the LC filter circuit 380 that is connected to, or is configured to be connectable to, to a ground).

According to an embodiment, in one switching period of the plurality of switches Q1, Q2, Q3, Q4, Q5, and Q6, the plurality of switches Q1, Q2, Q3, Q4, Q5, and Q6 may be turned on or off such that a voltage corresponding to 0V is applied to the LC filter circuit 380.

According to an embodiment, in one switching period of the plurality of switches Q1, Q2, Q3, Q4, Q5, and Q6, the plurality of switches Q1, Q2, Q3, Q4, Q5, and Q6 may be turned on or off such that a second voltage is applied to the LC filter circuit 380.

According to an embodiment, in one switching period of the plurality of switches Q1, Q2, Q3, Q4, Q5, and Q6, the plurality of switches Q1, Q2, Q3, Q4, Q5, and Q6 may be turned on or off such that a third voltage is applied to the LC filter circuit 380.

According to an embodiment, the charge pump 350 may output any one of the voltage corresponding to 0V, a second voltage, and a third voltage to the LC filter circuit 380 based on the positive first voltage VBAT (e.g., 5V) provided from the input power source 340. That is, the charge pump 350 may be configured to receive the positive first voltage VBAT from the input power source, and to output any one of the voltage corresponding to 0V, the second voltage, and the third voltage to the LC filter circuit 380. For example, the voltage corresponding to 0V may mean a voltage having a magnitude of 0V. For example, the second voltage may be a voltage having an opposite sign of the first voltage VBAT and a magnitude equal to the magnitude of the first voltage VBAT (i.e. -VBAT). For example, the third voltage may be a voltage having the opposite sign of the first voltage VBAT and a magnitude twice the magnitude of the first voltage VBAT (i.e. -2VBAT).

According to an embodiment, the control circuit 220 may turn on or off the plurality of switches Q1, Q2, Q3, Q4, Q5, and Q6 such that at least one of the voltage corresponding to "0V", the second voltage, or the third voltage is applied to the LC filter circuit 380 in one switching period of the plurality of switches Q1, Q2, Q3, Q4, Q5, and Q6. That is, the charge pump 350 may be configured to be controlled by the control circuit 220 such that the plurality of switches Q1, Q2, Q3, Q4, Q5, and Q6 are turned on and off to apply at least one of the voltage corresponding to "0V", the second voltage, or the third voltage to the LC filter circuit 380 in one switching period of the plurality of switches Q1, Q2, Q3, Q4, Q5, and Q6. For example, the charge pump 350 may be configured to receive control signals from the control circuit 220 for turning each of the plurality of switches Q1, Q2, Q3, Q4, Q5, and Q6 on and off.

According to an embodiment, the first converter circuit 302 may supply an ELVSS voltage to the display panel 265 based on applying the at least one of the voltage corresponding to "0V", the second voltage, or the third voltage to the LC filter circuit 380. That is, the first converter circuit 302 may be configured to output at least one of the voltage corresponding to "0V", the second voltage, or the third voltage to the LC filter circuit 380 such that a target ELVSS voltage is supplied to the display panel 265. For example, an average value of voltages applied to the LC filter circuit 380 may be supplied as the ELVSS voltage to the display panel 265. For example, the first converter circuit 302 may supply a voltage corresponding to a target ELVSS voltage (e.g., - 9V) as the ELVSS voltage to the display panel 265. For example, the first converter circuit 302 may be configured to sequentially or alternately output (under the control of the control circuit 220) the voltage corresponding to 0V, the second voltage, and the third voltage to the LC filter circuit 380 during one switching period of the switches in order to supply an average value of voltages equal to (or substantially equal to, e.g. within a certain deviation from) the target ELVSS voltage.

According to an embodiment, a current IL may be conducted through the inductor L. The magnitude of the current IL conducted through the inductor 365 may be less than the magnitudes of currents applied to the inductors 315 and 325 included in the inverting buckbooster of FIG. 3A. A relatively high voltage may be applied to the first switch Q1 and the sixth switch Q6 of the plurality of switches Q1, Q2, Q3, Q4, Q5, and Q6. Accordingly, the first switch Q1 and the sixth switch Q6 may be designed as high voltage-resistant devices (e.g., 10V-resistant devices). On the contrary, a relatively low voltage may be applied to the remaining switches Q2, Q3, Q4, and Q5. Accordingly, the remaining switches Q2, Q3, Q4, and Q5 may be designed as devices (e.g., 5V-resistant devices) that are not resistant to high voltages, compared to the first switch Q1 and the sixth switch Q6.

According to an embodiment, the first converter circuit 302 may require two more switches than the first converter circuit 301 of FIG. 3A. However, the first converter circuit 302 may overcome disadvantages that may be encountered with the inverting buckbooster of FIG. 3A. For example, the first converter circuit 302 may reduce the magnitude of the current applied to the inductor L and the magnitude of the voltage applied to the switches Q2, Q3, Q4, and Q5. Further, the first converter circuit 302 may reduce the size of the inductor, compared to the first converter circuit 301. Accordingly, the first converter circuit 302 may be implemented in a smaller size than the first converter circuit 301. The first converter circuit 302 may also have a higher efficiency than the first converter circuit 301. In various embodiments of the disclosure, the first converter circuit 245 of FIG. 2 may be implemented as the first converter circuit 302 of FIG. 3B.

At least some of the operations of the electronic device 201 described below may be performed by the control circuit 220. For ease of description, however, the operations will be described as performed by the electronic device 201.

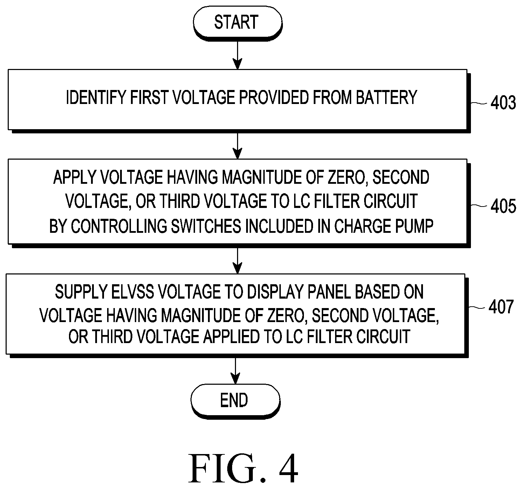

FIG. 4 is a flowchart illustrating an operation of supplying an ELVSS voltage to a display panel according to an embodiment.

Referring to FIG. 4, according to an embodiment, an electronic device (e.g., electronic device 201 of FIG. 2) may identify a first voltage provided from a battery (e.g., the input power source 340 of FIG. 3B) in operation 403. For example, the electronic device 201 may identify the magnitude of the first voltage.

According to an embodiment, in operation 405, the electronic device 201 may control the switches included in the charge pump 350 of the first converter circuit (e.g., the first converter circuit 302 of FIG. 3B) to apply a voltage having a magnitude of zero (0V), a second voltage, or a third voltage to the LC filter circuit (e.g., the LC filter circuit 380 of FIG. 3B). For example, the electronic device 201 may sequentially or alternately apply the voltage corresponding to 0V, the second voltage, and the third voltage to the LC filter circuit 380 during one switching period of the switches. For example, the second voltage may be a voltage having an opposite sign of the first voltage and a magnitude equal to that of the first voltage. For example, the third voltage may be a voltage having the opposite sign of the first voltage and a magnitude twice the magnitude of the first voltage.

According to an embodiment, in operation 407, the electronic device 201 may supply an ELVSS voltage to the display panel (e.g., the display panel 265 of FIG. 2) based on the voltage corresponding to 0V, the second voltage, or the third voltage applied to the LC filter circuit 380. For example, the averaged voltage over the switching period may be equal to (or substantially equal to, e.g. within a certain deviation from) a target ELVSS voltage.

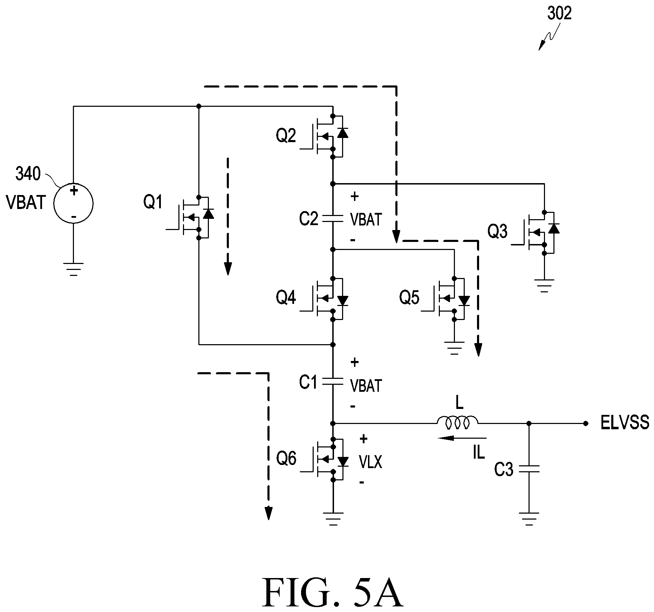

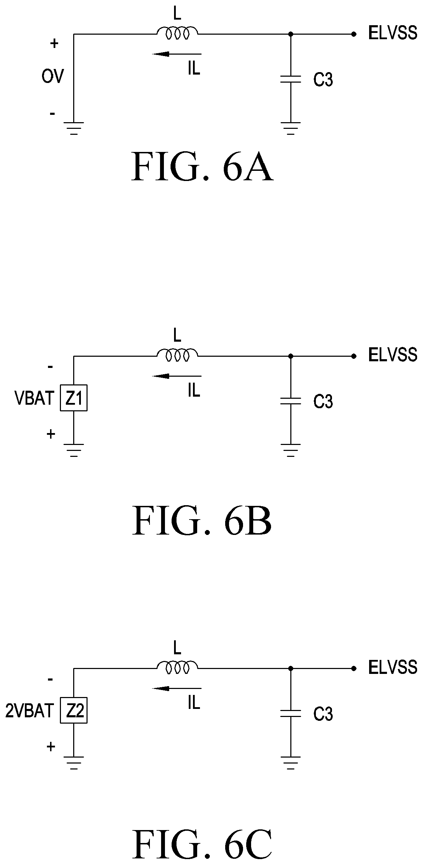

FIG. 5A is a diagram illustrating an operation of controlling a plurality of switches in a first operation mode according to an embodiment. FIG. 6A is a diagram illustrating an operation of applying a voltage of 0V to an LC filter circuit in the first operation mode according to an embodiment.

Referring to FIG. 5A, according to an embodiment, the first voltage VBAT may be applied to each of the first capacitor C1 and the second capacitor C2 without any voltage being applied to one end of the inductor L in the first operation mode of the first converter circuit 302. Herein, the plurality of switches Q1, Q2, Q3, Q4, Q5, and Q6 may be turned on or off under the control of the control circuit 220. For example, in the first operation mode of the first converter circuit 302, the first switch Q1, the second switch Q2, the fifth switch Q5, and the sixth switch Q6 may be turned on, whereas the third switch Q3 and the fourth switch Q4 may be turned off.

According to an embodiment, as the first voltage VBAT is applied to the first capacitor C1 and the second capacitor C2 in the first operation mode, each of the first capacitor C1 and the second capacitor C2 may be charged with the first voltage VBAT.

Referring to FIGS. 5A and 6A, according to an embodiment, in the first operation mode of the first converter circuit 302, the voltage corresponding to 0V may be applied to one end of the inductor L (or an input end/first terminal of the LC filter circuit). The ELVSS voltage may be applied to the other end of the inductor L. That is, an input end voltage VLX of the LC filter circuit may be "0V". At this time, the inductor current IL may be linearly decreased, while freewheeling.

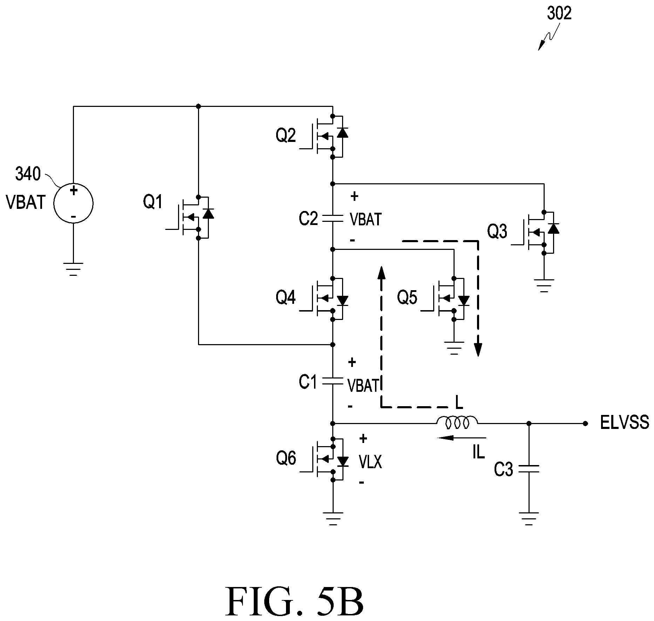

FIG. 5B is a diagram illustrating an operation for controlling a plurality of switches in a second operation mode, according to an embodiment. FIG. 6B is a diagram illustrating an operation of applying a second voltage to an LC filter circuit in the second operation mode according to an embodiment.

Referring to FIG. 5B, in the second operation mode of the first converter circuit 302, a second voltage may be applied to one end of the inductor L according to an embodiment. For example, the second voltage may be a voltage having the opposite sign of the first voltage VBAT and a magnitude equal to the magnitude of the first voltage VBAT. At this time, the plurality of switches Q1, Q2, Q3, Q4, Q5, and Q6 may be turned on or off under the control of the control circuit 220. For example, in the second operation mode of the first converter circuit 302, the fourth switch Q4 and the fifth switch Q5 may be turned on, whereas the first switch Q1, the second switch Q2, the third switch Q3, and the sixth switch Q6 may be turned off.

Referring to FIGS. 5B and 6B, according to an embodiment, the second voltage may be applied to the one end of the inductor L (or the input end/first terminal of the LC filter circuit) in the second operation mode of the first converter circuit 302. That is, the input end voltage VLX of the LC filter circuit may be "-VBAT". At this time, the inductor current IL may be linearly increased by the input end voltage VLX. For example, the charge pump 350 viewed from the one end of the inductor L may be equivalently represented as first impedance Z 1.

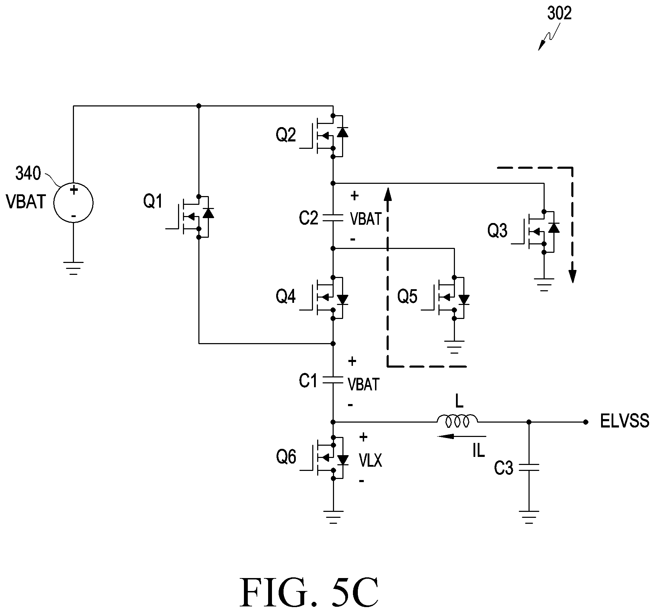

FIG. 5C is a diagram illustrating a method of controlling a plurality of switches in a third operation mode according to an embodiment. FIG. 6C is a diagram illustrating an operation of applying a third voltage to an LC filter circuit in the third operation mode according to an embodiment.

Referring to FIG. 5C, in the third operation mode of the first converter circuit 302, the third voltage may be applied to the one end of the inductor L according to an embodiment. For example, the third voltage may be a voltage having the opposite sign of the first voltage VBAT and a magnitude twice as large as that of the first voltage VBAT. At this time, the plurality of switches Q1, Q2, Q3, Q4, Q5, and Q6 may be turned on or off under the control of the control circuit 220. For example, in the third operation mode of the first converter circuit 302, the third switch Q3 and the fourth switch Q4 may be turned on, whereas the first switch Q1, the second switch Q2, the fifth switch Q5, and the sixth switch Q6 may be turned off.

Referring to FIGS. 5C and 6C, according to an embodiment, the third voltage may be applied to the one end of the inductor L (or the input end/first terminal of the LC filter circuit) in the third operation mode of the first converter circuit 302. That is, the input end voltage VLX of the LC filter circuit may be "-2VBAT". At this time, the inductor current IL may be linearly increased by the input end voltage VLX. For example, the charge pump 350 viewed from the one end of the inductor L may be equivalently represented as second impedance Z2.

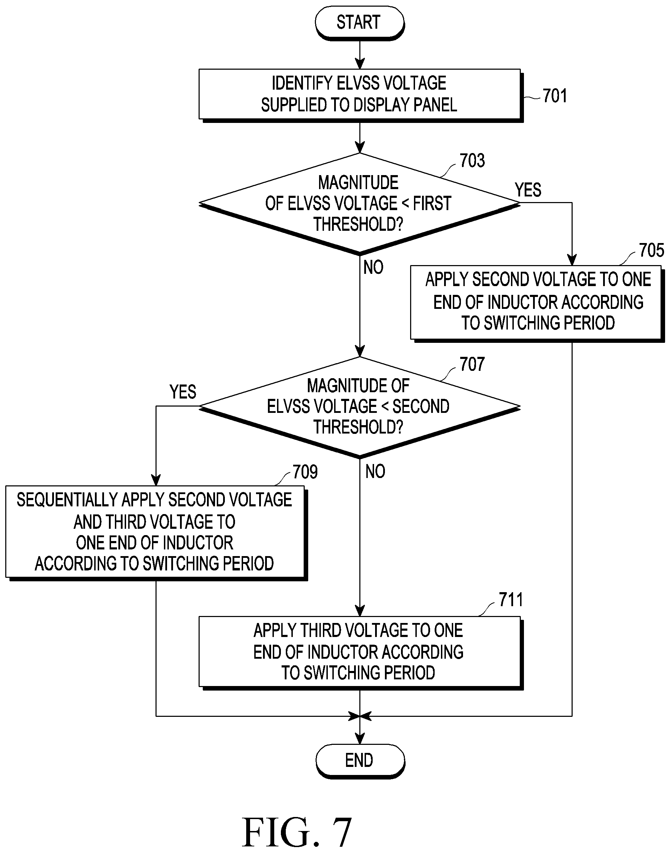

FIG. 7 is a flowchart illustrating a method of applying at least one of a second voltage or a third voltage to an LC filter circuit to supply an ELVSS voltage to a display panel according to an embodiment.

Referring to FIG. 7, according to an embodiment, an electronic device (e.g., the electronic device 201) may identify an ELVSS voltage (or a negative bias voltage) supplied to a display panel (e.g., the display panel 265 of FIG. 2) in operation 701. That is, the electronic device 201 may identify a target ELVSS voltage to be supplied to the display panel 265. For example, the electronic device 201 may identify the magnitude of the ELVSS voltage (e.g., the absolute value of the ELVSS voltage) to be output from the first converter circuit 302.

According to an embodiment, in operation 703, the electronic device 201 may identify whether the magnitude of the ELVSS voltage is less than a first threshold. For example, the first threshold may be determined based on a first voltage (e.g., VBAT) provided through a battery (e.g., the input power source 340 of FIG. 3B). For example, the first threshold may be determined as a value equal to 80 to 90% of the first voltage (e.g., VBAT). For example, as the magnitude of the first voltage is changed (e.g., in the range of 3.2V to 5V), the magnitude of the first threshold may also be changed. For example, when the magnitude of the first voltage is decreased, the magnitude of the first threshold may also be decreased.

According to an embodiment, when identifying that the magnitude of the ELVSS voltage is less than the first threshold (e.g., yes in operation 703), the electronic device 201 may apply a second voltage (e.g., -VBAT) to one end of the inductor L included in the first converter circuit 302 according to a switching period of the switches included in the first converter circuit 302 in operation 705. For example, the electronic device 201 may alternately apply 0V and the second voltage (e.g., -VBAT) to the input end of the LC filter circuit (or the one end of the inductor L) included in the first converter circuit 302 according to a specified (or calculated) duty ratio.

According to an embodiment, when identifying that the magnitude of the ELVSS voltage is not less than the first threshold (no in operation 703), the electronic device 201 may identify whether the ELVSS voltage is less than a second threshold in operation 707. For example, the second threshold may be determined based on the first voltage (e.g., VBAT) provided through the battery 340. For example, the second threshold may be greater than the first threshold. For example, the second threshold may be determined as a value equal to about 150% of the first voltage (e.g., VBAT). For example, as the magnitude of the first voltage is changed, the magnitude of the second threshold may also be changed. For example, when the magnitude of the first voltage is decreased, the magnitude of the second threshold may also be decreased.

According to an embodiment, when identifying that the magnitude of the ELVSS voltage is less than the second threshold (yes in operation 707), the electronic device 201 may sequentially apply the second voltage (e.g., -VBAT) and a third voltage (e.g., -2VBAT) to the inductor L included in the first converter circuit 302 according to the switching period of the switches included in the first converter circuit 302 in operation 709. For example, the electronic device 201 may alternately apply 0V, the second voltage (e.g., -VBAT), and the third voltage (e.g., -2VBAT) to the input end of the LC filter circuit (or to the one end of the inductor L) included in the first converter circuit 302 according to a specified (or calculated) duty ratio. For example, the order in which the second and third voltages are applied to the input end of the LC filter circuit may be changed.

According to an embodiment, when identifying that the magnitude of the ELVSS voltage is not less than the second threshold (no in operation 707), the electronic device 201 may apply the third voltage (e.g., -2VBAT) to the one end of the inductor L included in the first converter circuit 302 according to the switching period of the switches included in the first converter circuit 302 in operation 711. For example, the electronic device 201 may alternately apply 0V and the third voltage (e.g., -2 VBAT) to the input end of the LC filter circuit (or to the one end of the inductor L) included in the first converter circuit 302 according to a specified (or calculated) duty ratio.

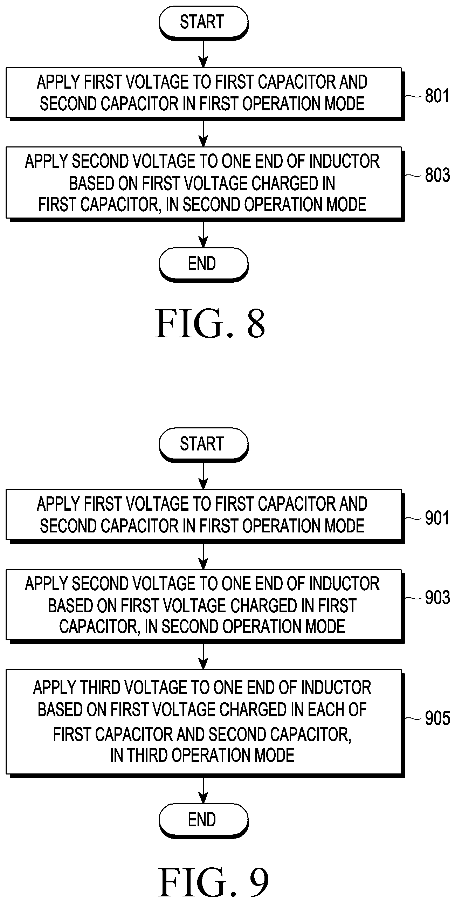

FIG. 8 is a flowchart illustrating a method of controlling a plurality of switches, when an ELVSS voltage is less than a first threshold according to an embodiment.

Referring to FIG. 8, according to an embodiment, the electronic device 201 may apply a first voltage (e.g., VBAT in FIG. 3B) to the first capacitor C1 and the second capacitor C2 included in the first converter circuit (e.g., the first converter circuit 302 of FIG. 3B) in the first operation mode of the first converter circuit in operation 801. The first capacitor C1 and the second capacitor C2 may be charged with the first voltage. At this time, a voltage corresponding to 0V may be applied to one end of the inductor L included in the LC filter circuit 380 of the first converter circuit 302.

According to an embodiment, in operation 803, the electronic device 201 may apply a second voltage (e.g., -VBAT) to the one end of the inductor L based on the first voltage charged in the first capacitor C1 in the second operation mode of the first converter circuit 302.

According to an embodiment, the electronic device 201 may alternately apply 0V and the second voltage (e.g., -VBAT) to the one end of the inductor L by switching between the first operation mode and the second operation mode. At this time, a duty ratio at which each of the voltage of 0V and the second voltage (e.g., -VBAT) is applied to the one end of the inductor L may be determined based on the ELVSS voltage and the first voltage VBAT.

According to an embodiment, the electronic device 201 may supply a voltage corresponding to a target ELVSS voltage to the display panel (e.g., the display panel 265 of FIG. 2) based on the voltage of 0V and the second voltage (e.g., -VBAT) alternately applied to the one end of the inductor L.

FIG. 9 is a flowchart illustrating a method of controlling a plurality of switches, when an ELVSS voltage is not less than a first threshold and less than a second threshold according to an embodiment.

According to an embodiment, in operation 901, the electronic device 201 may apply a first voltage (e.g., VBAT in FIG. 3B) to the first capacitor C1 and the second capacitor C2 included in the first converter circuit (e.g., the first converter circuit 302 of FIG. 3B) in the first operation mode. The first capacitor C1 and the second capacitor C2 may be charged with the first voltage. At this time, a voltage corresponding to 0V may be applied to one end of the inductor L included in the LC filter circuit 380 of the first converter circuit 302.

According to an embodiment, in operation 903, the electronic device 201 may apply a second voltage (e.g., -VBAT) to the one end of the inductor L based on the first voltage charged in the first capacitor C1 in the second operation mode of the first converter circuit 302.

According to an embodiment, in operation 905, the electronic device 201 may apply a third voltage (e.g., -2VBAT) to the one end of the inductor L based on the first voltage charged in each of the first capacitor C1 and the second capacitor C2 in the third operation mode of the first converter circuit 302.

According to an embodiment, the electronic device 201 may alternately apply 0V, the second voltage (e.g., -VBAT), and the third voltage (e.g., -2 VBAT) to the inductor L by switching among the first operation mode, the second operation mode, and the third operation mode. At this time, a duty ratio at which each of the voltage of 0V, the second voltage (e.g., - VBAT), and the third voltage (e.g., -2VBAT) is applied to the one end of the inductor L may be determined based on the ELVSS voltage and the first voltage VBAT.

According to an embodiment, the electronic device 201 may supply a voltage corresponding to a target ELVSS voltage to the display panel (e.g., the display panel 265 of FIG. 2) based on the voltage of 0V, the second voltage (e.g., -VBAT), and the third voltage (e.g., -2 VBAT) alternately applied to the one end of the inductor L.

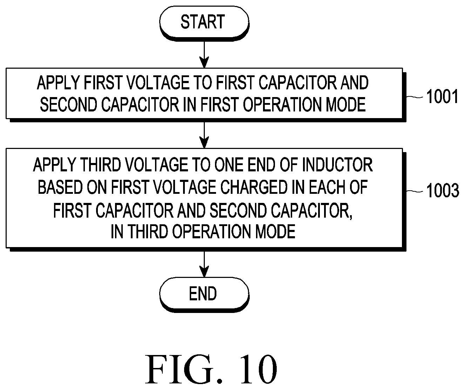

FIG. 10 is a flowchart illustrating a method of controlling a plurality of switches, when an ELVSS voltage is not less than a second threshold according to an embodiment.

According to an embodiment, in operation 1001, the electronic device 201 may apply a first voltage (e.g., VBAT in FIG. 3B) to the first capacitor C1 and the second capacitor C2 included in the first converter circuit (e.g., the first converter circuit 302 of FIG. 3B) in the first operation mode. The first capacitor C1 and the second capacitor C2 may be charged with the first voltage. At this time, a voltage corresponding to 0V may be applied to one end of the inductor L included in the LC filter circuit 380 of the first converter circuit 302.

According to an embodiment, in operation 1003, the electronic device 201 may apply a third voltage (e.g., -2VBAT) to the one end of the inductor L based on the first voltage charged to each of the first capacitor C1 and the second capacitor C2 in the third operation mode of the first converter circuit 302.

According to an embodiment, the electronic device 201 may alternately apply 0V and the third voltage (e.g., -2VBAT) to the one end of the inductor L by switching between the first operation mode and the third operation mode. At this time, a duty ratio at which each of the voltage of 0V and the third voltage (e.g., -2VBAT) is applied to the one end of the inductor L may be determined based on the ELVSS voltage and the first voltage VBAT.

According to an embodiment, the electronic device 201 may supply a voltage corresponding to a target ELVSS voltage to the display panel (e.g., the display panel 265 of FIG. 2) based on the voltage of 0V and the third voltage (e.g., -2VBAT) alternately applied to the one end of the inductor L.

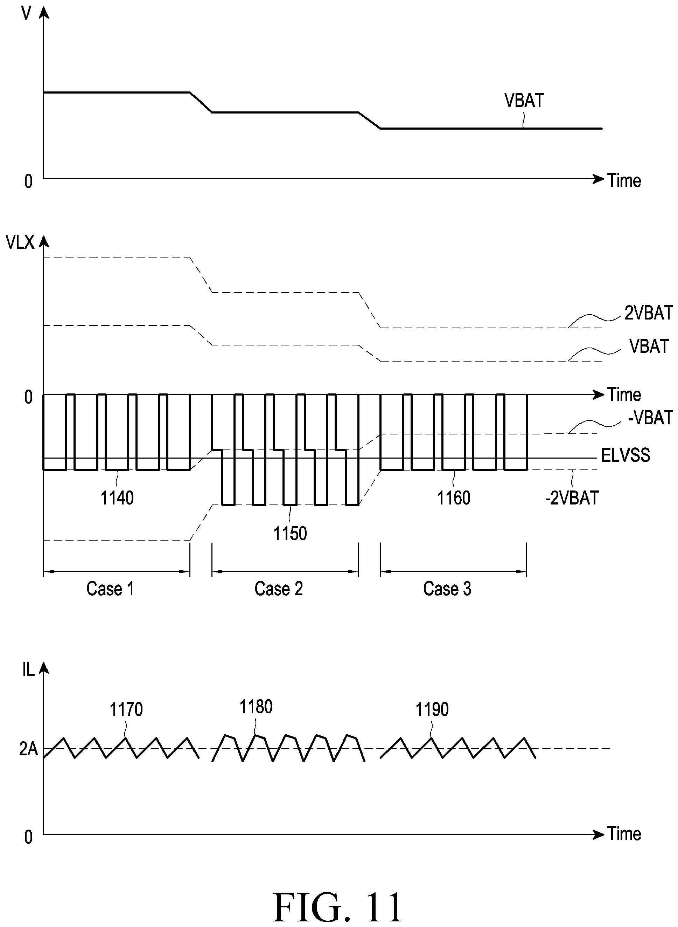

FIG. 11 is graphs referred to for illustrating an operation of applying at least one of a second voltage or a third voltage to an LC filter circuit to supply an ELVSS voltage to a display panel according to an embodiment.

Referring to FIG. 11, according to an embodiment, the first voltage VBAT provided from the battery (e.g., the input power source 340 of FIG. 3B) may vary over time.

According to an embodiment, the input end voltage VLX may be applied to the input end of the LC filter circuit (e.g., the LC filter circuit 380 of FIG. 3B).

According to an embodiment, a first state (CASE 1) may refer to a case where the magnitude of an output voltage (e.g., the target ELVSS voltage) of the first converter circuit (e.g., the first converter circuit 302 of FIG. 3B) is less than the second threshold. In the first state (CASE 1), the second voltage (-VBAT) having a magnitude equal to the first voltage VBAT and the opposite sign of the first voltage VBAT may be applied to the input end of the LC filter circuit 380 according to a specified (or calculated) duty ratio. For example, a voltage 1140 corresponding to the second voltage -VBAT may be applied to the input end of the LC filter circuit 380 according to the specified (or calculated) duty ratio. The ELVSS voltage may be supplied to the display panel (e.g., the display panel 265 of FIG. 2) based on the voltage 1140 applied to the LC filter circuit 380.

According to an embodiment, CASE 2 may refer to a case where the magnitude of the output voltage (e.g., the target ELVSS voltage) is not less than the first threshold and less than the second threshold. In the second state (CASE 2), the second voltage -VBAT having a magnitude equal to the first voltage VBAT and the opposite sign of the first voltage VBAT and the third voltage (-2 VBAT) having a magnitude twice as large as the magnitude of the first voltage VBAT and the opposite sign of the first voltage VBAT may be sequentially applied to the input end of the LC filter circuit 380 according to a specified (or calculated) duty ratio. For example, the second voltage -VBAT and a voltage 1150 corresponding to the third voltage -2VBAT may be sequentially applied to the input end of the LC filter circuit 380 according to the specified duty ratio. The ELVSS voltage may be supplied to the display panel (e.g., the display panel 265 of FIG. 2) based on the voltage 1150 applied to the LC filter circuit 380.

According to an embodiment, the third state (CASE 3) may refer to a case where the magnitude of the output voltage (e.g., the target ELVSS voltage) is less than the first threshold. In the third state (CASE 3), the third voltage (-2VBAT) having twice the magnitude of the first voltage VBAT and the opposite sign of the first voltage VBAT may be applied to the input end of the LC filter circuit 380 based on a specified (or calculated) duty ratio. For example, a voltage 1160 corresponding to the third voltage -2VBAT may be applied to the input end of the LC filter circuit 380 based on the specified duty ratio. The ELVSS voltage may be supplied to a display panel (e.g., the display panel 265 of FIG. 2) based on the voltage 1160 applied to the LC filter circuit 380.

According to an embodiment, in the first state (CASE 1), an inductor current 1170 may fluctuate around 2A (e.g., up to 2.05A). In the second state (CASE 2), an inductor current 1180 may fluctuate around 2A (e.g., up to 2.05A). In the third state (CASE 3), an inductor current 1190 may fluctuate around 2A (e.g., up to 2.05A).

According to an embodiment, a current with a small magnitude may be conducted through the inductor L included in the LC filter circuit 380, compared to the inductors 315 and 325 included in the inverting buck-booster 301 of FIG. 3A. Accordingly, the inductor L included in the LC filter circuit 380 may not be designed in a large size enough to withstand a high current. In other words, the first converter circuit 302 may be advantageous over the inverting buckbooster 301 in terms of circuit configuration. Additionally, the first converter circuit 302 may have higher power efficiency than the inverting buckbooster.

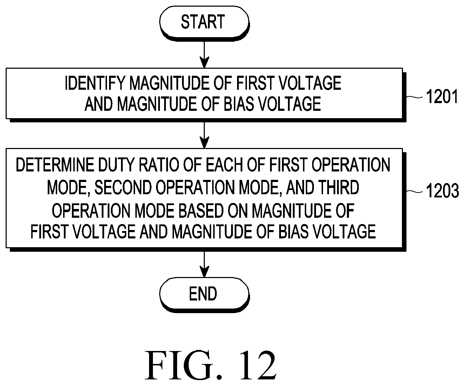

FIG. 12 is a flowchart illustrating a method of determining a duty ratio for each of the first operation mode, the second operation mode, and the third operation mode according to an embodiment.

Referring to FIG. 12, according to an embodiment, the electronic device 201 may identify the magnitude of a first voltage provided from the battery (e.g., the input power source 340 of FIG. 3B) and the magnitude of a negative bias voltage (e.g. the target ELVSS voltage) to be output from the first converter circuit (e.g., the converter circuit 302 of FIG. 3B) in operation 1201.

According to an embodiment, in operation 1203, the electronic device 201 may determine a duty ratio for each of the first operation mode, the second operation mode, and the third operation mode based on the magnitude of the first voltage and the magnitude of the bias voltage.

For example, when the duty ratio of the first operation mode is D1, the duty ratio of the second operation mode is D2, and the duty ratio of the third operation mode is D3, a relationship between the duty ratios may be determined by Equation 1.

[Equation 1]

$$D1 + D2 + D3 = 1$$

When the first voltage provided by the battery is VBAT and the output voltage (e.g., target ELVSS voltage) of the first converter circuit 302 is V0, the output voltage (e.g., target ELVSS voltage) of the first converter circuit 302 is given by Equation 2.

[Equation 2]

$$V0 = -VBAT \times (D2 + (2 \times D3))$$

According to an embodiment, the electronic device 201 may apply 0V and a second voltage (e.g., -VBAT) to the input end of the LC filter circuit in every period (e.g., switching period) by switching between the first operation mode and the second operation mode in the first state (CASE 1) of FIG. 11. For example, because D3=0, which represents the duty ratio of the third operation mode not being used in the first state, the duty ratio of each of the first and second operation modes may be determined as D1+D2=1. The duty ratio of the second operation mode may be determined as D2=-V0/VBAT.

According to an embodiment, the electronic device 201 may apply 0V, the second voltage (e.g., -VBAT), and a third voltage (e.g., -2VBAT) to the input end of the LC filter circuit in every predetermined period (e.g., switching period) by switching among the first operation mode, the second operation mode, and the third operation mode in the second state (CASE 2) of FIG. 11. For example, the duty ratio of each of the second operation mode and the third operation mode may be determined as D1+D2+D3=1. The duty ratio of each of the second operation mode and the third operation mode may be determined as D2+2*D3=-V0/VBAT. In this case, as power loss caused by the ripple of the inductor current IL may increase, the second operation mode and the third operation mode may be performed according to an appropriate ratio.

According to an embodiment, the electronic device 201 may apply 0V and the third voltage (e.g., -2 VBAT) to the input end of the LC filter circuit in every predetermined period (e.g., switching period) by switching between the first operation mode and the third operation mode in the third state (CASE 3) of FIG. 11. For example, because D2=0 represents the duty ratio of the second operation mode not being used in the third state, the duty ratio of each of the first and third operation modes may be determined as D1+D3=1. The duty ratio of the third operation mode may be determined as D3=-V0/VBAT*0.5. In this case, since the magnitude of the first voltage is small enough, the ripple of the inductor current IL may not be large despite switching between the first and third operation modes without the second operation mode.

The electronic device 201 according to an embodiment may include the battery 340, the display 260 including the display panel 265, the converter circuit 245 or 302 configured to generate a negative bias voltage applied to the display panel, wherein the converter circuit may include the charge pump 350 including a first capacitor, a second capacitor, and a plurality of switches, and the LC filter circuit 380 connected to the charge pump, and the control circuit 220. The control circuit according to an embodiment may be configured to control the plurality of switches included in the charge pump to apply, to the LC filter circuit, in a switching period of the plurality of switches, one of a voltage having a magnitude of zero, a second voltage having an opposite sign of a first voltage provided from the battery and a magnitude equal to a magnitude of the first voltage, or a third voltage having the opposite sign of the first voltage and a magnitude converted to twice the magnitude of the first voltage. The control circuit according to an embodiment may be configured to control the converter circuit to supply a negative bias voltage to the display panel based on applying the voltage having the magnitude of zero, the second voltage, or the third voltage to the LC filter circuit.

A first switch of the plurality of switches according to an embodiment may be connected between the battery and one end of the first capacitor. A second switch of the plurality of switches according to an embodiment may be connected between the battery and one end of the second capacitor. A third switch of the plurality of switches according to an embodiment may be connected between the one end of the second capacitor and a ground. A fourth switch of the plurality of switches according to an embodiment may be connected between the other end of the second capacitor and the one end of the first capacitor. A fifth switch of the plurality of switches according to an embodiment may be connected between the other end of the second capacitor and the ground. A sixth switch of the plurality of switches according to an embodiment may be connected between the other end of the first capacitor and the ground. The LC filter circuit according to an embodiment may be connected between the other end of the first capacitor and the sixth switch.

The LC filter circuit according to an embodiment may include an inductor and a third capacitor. One end of the inductor according to an embodiment may be connected to the other end of the first capacitor and the sixth switch. The other end of the inductor according to an embodiment may be connected to the third capacitor and the display panel.

The control circuit according to an embodiment may be configured to supply the negative bias voltage to the display panel by turning on or off the plurality of switches according to one of a first operation mode, a second operation mode, and a third operation mode.

The control circuit according to an embodiment may be configured to turn on or off the plurality of switches to apply no voltage to the one end of the inductor and apply the first voltage to each of the first capacitor and the second capacitor in the first operation mode. The control circuit according to an embodiment may be configured to turn on or off the plurality of switches to apply the second voltage to the one end of the inductor based on the first voltage applied to the first capacitor in the second operation mode. The control circuit according to an embodiment may be configured to turn on or off the plurality of switches to apply the third voltage to the one end of the inductor based on the first voltage applied to each of the first capacitor and the second capacitor in the third operation mode.

The control circuit according to an embodiment may be configured to turn on the first switch, the second switch, the fifth switch, and the sixth switch and turn off the third switch and the fourth switch in the first operation mode.

The control circuit according to an embodiment may be configured to turn on the fourth switch and the fifth switch and turn off the first switch, the second switch, the third switch, and the sixth switch in the second operation mode.

The control circuit according to an embodiment may be configured to turn on the third switch and the fourth switch and turn off the first switch, the second switch, the fifth switch, and the sixth switch in the third operation mode.

The control circuit according to an embodiment may be configured to control the plurality of switches to perform the first operation mode and the second operation mode alternately in each switching period, based on identifying that a magnitude of the negative bias voltage is less than a first threshold based on the first voltage.

The control circuit according to an embodiment may be configured to control the plurality of switches to perform the first operation mode, the second operation mode, and the third operation mode alternately in each switching period, based on identifying that the magnitude of the negative bias voltage is not less than a first threshold based on the first voltage and is less than a second threshold greater than the first threshold.

The control circuit according to an embodiment may be configured to control the plurality of switches to perform the first operation mode and the third operation mode alternately in each switching period, based on identifying that the magnitude of the negative bias voltage is not less than a second threshold based on the first voltage.

The control circuit according to an embodiment may be configured to determine a duty ratio of each of the first operation mode, the second operation mode, and the third operation mode in each switching period, based on the magnitude of the first voltage and the magnitude of the negative bias voltage.

In a method of operating the electronic device 201, the electronic device may include the battery 340, the display 260 including the display panel 265, and the converter circuit 245 or 302 including the charge pump 350 including a first capacitor, a second capacitor, and a plurality of switches, and the LC filter circuit 380 connected to the charge pump. The method of operating the electronic device according to an embodiment may include controlling the plurality of switches included in the charge pump to apply, to the LC filter circuit, in a switching period of the plurality of switches, one of a voltage having a magnitude of zero, a second voltage having an opposite sign of a first voltage provided from the battery and a magnitude equal to a magnitude of the first voltage, or a third voltage having the opposite sign of the first voltage and a magnitude converted to twice the magnitude of the first voltage. The method of operating the electronic device according to an embodiment may include controlling the converter circuit to supply a negative bias voltage to the display panel based on applying the voltage having the magnitude of zero, the second voltage, or the third voltage to the LC filter circuit.

A first switch of the plurality of switches according to an embodiment may be connected between the battery and one end of the first capacitor. A second switch of the plurality of switches according to an embodiment may be connected between the battery and one end of the second capacitor. A third switch of the plurality of switches according to an embodiment may be connected between the one end of the second capacitor and a ground. A fourth switch of the plurality of switches according to an embodiment may be connected between the other end of the second capacitor and the one end of the first capacitor. A fifth switch of the plurality of switches according to an embodiment may be connected between the other end of the second capacitor and the ground. A sixth switch of the plurality of switches according to an embodiment may be connected between the other end of the first capacitor and the ground. The LC filter circuit according to an embodiment may include an inductor and a third capacitor. One end of the inductor according to an embodiment may be connected to the other end of the first capacitor and the sixth switch. The other end of the inductor according to an embodiment may be connected to the third capacitor and the display panel.

The method of operating the electronic device according to an embodiment may further include supplying the negative bias voltage to the display panel by turning on or off the plurality of switches according to one of a first operation mode, a second operation mode, and a third operation mode.

The method of operating the electronic device according to an embodiment may further include turning on or off the plurality of switches to apply no voltage to the one end of the inductor and apply the first voltage to each of the first capacitor and the second capacitor in the first operation mode. The method of operating the electronic device according to an embodiment may further include turning on or off the plurality of switches to apply the second voltage to the one end of the inductor based on the first voltage applied to the first capacitor in the second operation mode. The method of operating the electronic device according to an embodiment may further include turning on or off the plurality of switches to apply the third voltage to the one end of the inductor based on the first voltage applied to each of the first capacitor and the second capacitor in the third operation mode.

The method of operating the electronic device according to an embodiment may further include turning on the first switch, the second switch, the fifth switch, and the sixth switch and turning off the third switch and the fourth switch in the first operation mode. The method of operating the electronic device according to an embodiment may further include turning on the fourth switch and the fifth switch and turning off the first switch, the second switch, the third switch, and the sixth switch in the second operation mode. The method of operating the electronic device according to an embodiment may further include turning on the third switch and the fourth switch and turning off the first switch, the second switch, the fifth switch, and the sixth switch in the third operation mode.

The method of operating the electronic device according to an embodiment may further include controlling the plurality of switches to perform the first operation mode and the second operation mode alternately in each switching period, based on identifying that a magnitude of the negative bias voltage is less than a first threshold.

The method of operating the electronic device according to an embodiment may further include controlling the plurality of switches to perform the first operation mode, the second operation mode, and the third operation mode alternately in each switching period, based on identifying that the magnitude of the negative bias voltage is not less than a first threshold and is less than a second threshold greater than the first threshold.

The method of operating the electronic device according to an embodiment may further include controlling the plurality of switches to perform the first operation mode and the third operation mode alternately in each switching period, based on identifying that the magnitude of the negative bias voltage is not less than a second threshold.

It should be appreciated that embodiment(s) of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, circuitry, or the like. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (201) comprising:

a battery (340);
a display (260) including a display panel (265);
a converter circuit (245, 302) configured to generate a negative bias voltage applied to the display panel, wherein the converter circuit includes a charge pump (350) including a first capacitor, a second capacitor, and a plurality of switches, and an LC filter circuit (380) connected to the charge pump; and
a control circuit (220),
wherein the control circuit is configured to:

control the plurality of switches included in the charge pump to apply, to the LC filter circuit, in a switching period of the plurality of switches, one of:
a voltage having a magnitude of zero,

a second voltage having an opposite sign of a first voltage provided from the battery and a magnitude equal to a magnitude of the first voltage, or

a third voltage having the opposite sign of the first voltage and a magnitude converted to twice the magnitude of the first voltage, and

control the converter circuit to supply a negative bias voltage to the display panel based on applying the voltage having the magnitude of zero, the second voltage, or the third voltage to the LC filter circuit.

2. The electronic device of claim 1, wherein a first switch of the plurality of switches is connected between the battery and one end of the first capacitor,

wherein a second switch of the plurality of switches is connected between the battery and one end of the second capacitor,

wherein a third switch of the plurality of switches is connected between the one end of the second capacitor and a ground,

wherein a fourth switch of the plurality of switches is connected between the other end of the second capacitor and the one end of the first capacitor,

wherein a fifth switch of the plurality of switches is connected between the other end of the second capacitor and the ground,

wherein a sixth switch of the plurality of switches is connected between the other end of the first capacitor and the ground, and

wherein the LC filter circuit is connected between the other end of the first capacitor and the sixth switch.

3. The electronic device of any one of claims 1 and 2, wherein the LC filter circuit includes an inductor and a third capacitor,

wherein one end of the inductor is connected to the other end of the first capacitor and the sixth switch, and

wherein the other end of the inductor is connected to the third capacitor and the display panel.

4. The electronic device of any one of claims 1 to 3, wherein the control circuit is configured to supply the negative bias voltage to the display panel by turning on or off the plurality of switches according to one of a first operation mode, a second operation mode, and a third operation mode.

5. The electronic device of any one of claims 1 to 4, wherein the control circuit is configured to:

turn on or off the plurality of switches to apply no voltage to the one end of the inductor and apply the first voltage to each of the first capacitor and the second capacitor in the first operation mode,

turn on or off the plurality of switches to apply the second voltage to the one end of the inductor based on the first voltage applied to the first capacitor in the second operation mode, and

turn on or off the plurality of switches to apply the third voltage to the one end of the inductor based on the first voltage applied to each of the first capacitor and the second capacitor in the third operation mode.

6. The electronic device of any one of claims 1 to 5, wherein the control circuit is configured to turn on the first switch, the second switch, the fifth switch, and the sixth switch and turn off the third switch and the fourth switch in the first operation mode.

7. The electronic device of any one of claims 1 to 6, wherein the control circuit is configured to turn on the fourth switch and the fifth switch and turn off the first switch, the second switch, the third switch, and the sixth switch in the second operation mode.

8. The electronic device of any one of claims 1 to 7, wherein the control circuit is configured to turn on the third switch and the fourth switch and turn off the first switch, the second switch, the fifth switch, and the sixth switch in the third operation mode.

9. The electronic device of any one of claims 1 to 8, wherein the control circuit is configured to control the plurality of switches to perform the first operation mode and the second operation mode alternately in each switching period, based on identifying that a magnitude of the negative bias voltage is less than a first threshold based on the first voltage.

10. The electronic device of any one of claims 1 to 9, wherein the control circuit is configured to control the plurality of switches to perform the first operation mode, the second operation mode, and the third operation mode alternately in each switching period, based on identifying that the magnitude of the negative bias voltage is not less than a first threshold based on the first voltage and is less than a second threshold greater than the first threshold.

11. The electronic device of any one of claims 1 to 10, wherein the control circuit is configured to control the plurality of switches to perform the first operation mode and the third operation mode alternately in each switching period, based on identifying that the magnitude of the negative bias voltage is not less than a second threshold based on the first voltage.

**12.** The electronic device of any one of claims 1 to 11, wherein the control circuit is configured to determine a duty ratio of each of the first operation mode, the second operation mode, and the third operation mode in each switching period, based on the magnitude of the first voltage and the magnitude of the negative bias voltage.

**13.** A method of operating an electronic device (201) wherein the electronic device includes a battery (340), a display (260) including a display panel (265), and a converter circuit (245, 302) including a charge pump (350) including a first capacitor, a second capacitor, and a plurality of switches, and an LC filter circuit (380) connected to the charge pump, the method comprising:

controlling the plurality of switches included in the charge pump to apply, to the LC filter circuit, in a switching period of the plurality of switches, one of a voltage having a magnitude of zero, a second voltage having an opposite sign of a first voltage provided from the battery and a magnitude equal to a magnitude of the first voltage, or a third voltage having the opposite sign of the first voltage and a magnitude converted to twice the magnitude of the first voltage; and controlling the converter circuit to supply a negative bias voltage to the display panel based on applying the voltage having the magnitude of zero, the second voltage, or the third voltage to the LC filter circuit.

**14.** The method of claim 13, wherein a first switch of the plurality of switches is connected between the battery and one end of the first capacitor,

wherein a second switch of the plurality of switches is connected between the battery and one end of the second capacitor, wherein a third switch of the plurality of switches is connected between the one end of the second capacitor and a ground, wherein a fourth switch of the plurality of switches is connected between the other end of the second capacitor and the one end of the first capacitor, wherein a fifth switch of the plurality of switches is connected between the other end of the second capacitor and the ground, wherein a sixth switch of the plurality of switches is connected between the other end of the first capacitor and the ground, and wherein the LC filter circuit includes an inductor and a third capacitor, wherein one end of the inductor is connected to the other end of the first capacitor and the sixth switch, and

wherein the other end of the inductor is connected to the third capacitor and the display panel.

**15.** The method of any one of claims 13 to 14, further comprising supplying the negative bias voltage to the display panel by turning on or off the plurality of switches according to one of a first operation mode, a second operation mode, and a third operation mode.

FIG. 1

201

240

PMIC

260

DISPLAY

220

CONTROL
CIRCUIT

246

SECOND CONVERTER
CIRCUIT

265

DISPLAY
PANEL

ELVDD

245

FIRST CONVERTER
CIRCUIT

ELVSS

247

THIRD CONVERTER
CIRCUIT

AVDD

262

DDI

# FIG. 2

301

310    312                                    ELVSS
                                              (e.g., -9V)

305
VBAT                          315 ⌇IL1
(e.g., 5V)        308                         327

320    322

325 ⌇IL2

# FIG. 3A

FIG. 3B

START

IDENTIFY FIRST VOLTAGE PROVIDED FROM BATTERY — 403

APPLY VOLTAGE HAVING MAGNITUDE OF ZERO, SECOND
VOLTAGE, OR THIRD VOLTAGE TO LC FILTER CIRCUIT
BY CONTROLLING SWITCHES INCLUDED IN CHARGE PUMP — 405

SUPPLY ELVSS VOLTAGE TO DISPLAY PANEL BASED ON
VOLTAGE HAVING MAGNITUDE OF ZERO, SECOND VOLTAGE,
OR THIRD VOLTAGE APPLIED TO LC FILTER CIRCUIT — 407

END

FIG. 4

FIG. 5A

EP 4 394 754 A1

FIG. 5B

24

FIG. 5C

FIG. 6A

FIG. 6B

FIG. 6C

FIG. 7

START

APPLY FIRST VOLTAGE TO FIRST CAPACITOR AND
SECOND CAPACITOR IN FIRST OPERATION MODE — 801

APPLY SECOND VOLTAGE TO ONE END OF INDUCTOR
BASED ON FIRST VOLTAGE CHARGED IN
FIRST CAPACITOR, IN SECOND OPERATION MODE — 803

END

# FIG. 8

START

APPLY FIRST VOLTAGE TO FIRST CAPACITOR AND
SECOND CAPACITOR IN FIRST OPERATION MODE — 901

APPLY SECOND VOLTAGE TO ONE END OF INDUCTOR
BASED ON FIRST VOLTAGE CHARGED IN FIRST
CAPACITOR, IN SECOND OPERATION MODE — 903

APPLY THIRD VOLTAGE TO ONE END OF INDUCTOR
BASED ON FIRST VOLTAGE CHARGED IN EACH OF
FIRST CAPACITOR AND SECOND CAPACITOR,
IN THIRD OPERATION MODE — 905

END

# FIG. 9

START

APPLY FIRST VOLTAGE TO FIRST CAPACITOR AND
SECOND CAPACITOR IN FIRST OPERATION MODE — 1001

APPLY THIRD VOLTAGE TO ONE END OF INDUCTOR
BASED ON FIRST VOLTAGE CHARGED IN EACH OF
FIRST CAPACITOR AND SECOND CAPACITOR,
IN THIRD OPERATION MODE — 1003

END

# FIG. 10

FIG. 11

START

IDENTIFY MAGNITUDE OF FIRST VOLTAGE
AND MAGNITUDE OF BIAS VOLTAGE ~1201

DETERMINE DUTY RATIO OF EACH OF FIRST OPERATION
MODE, SECOND OPERATION MODE, AND THIRD
OPERATION MODE BASED ON MAGNITUDE OF
FIRST VOLTAGE AND MAGNITUDE OF BIAS VOLTAGE ~1203

END

FIG. 12

## INTERNATIONAL SEARCH REPORT

| International application No. |
| PCT/KR2023/017974 |

**A. CLASSIFICATION OF SUBJECT MATTER**

**G09G 3/3208**(2016.01)i; **H02M 1/00**(2007.01)i; **H02M 3/158**(2006.01)i

According to International Patent Classification (IPC) or to both national classification and IPC

**B. FIELDS SEARCHED**

Minimum documentation searched (classification system followed by classification symbols)

G09G 3/3208(2016.01); G09G 3/30(2006.01); G09G 3/32(2006.01); H02M 1/36(2007.01); H02M 3/07(2006.01); H02M 3/158(2006.01); H03L 7/093(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 컨버터 회로(converter circuit), 음의 바이어스(negative bias), 스위치(switch), 커패시터(capacitor), 필터(filter), 충전 펌프(charging pump)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0020685 A (SAMSUNG ELECTRONICS CO., LTD.) 24 February 2021 (2021-02-24) See paragraphs [0013]-[0029] and [0068]; and figures 1, 3a-4 and 17. | 1,4,13,15 |
| A | | 2-3,5-12,14 |
| Y | KR 10-0971131 B1 (CHANGWON NATIONAL UNIVERSITY INDUSTRY ACADEMY COOPERATION CORPS et al.) 20 July 2010 (2010-07-20) See paragraphs [0015] and [0018]; claim 1; and figures 2-4. | 1,4,13,15 |
| A | US 2017-0279354 A1 (TEXAS INSTRUMENTS DEUTSCHLAND GMBH) 28 September 2017 (2017-09-28) See paragraphs [0028]-[0057]; and figures 2-6b. | 1-15 |
| A | US 2014-0354349 A1 (CHENGDU MONOLITHIC POWER SYSTEMS, INC.) 04 December 2014 (2014-12-04) See paragraphs [0023]-[0044]; and figures 1-11. | 1-15 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 February 2024** | **16 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/017974** |

**C.     DOCUMENTS CONSIDERED TO BE RELEVANT**

| Category* | Citation of document, with indication, where appropriate, of the relevant passages | Relevant to claim No. |
|---|---|---|
| A | KR 10-2013-0026804 A (WIDECHIPS INC.) 14 March 2013 (2013-03-14)<br>See paragraphs [0010]-[0048]; and figures 1-7. | 1-15 |

Form PCT/ISA/210 (second sheet) (July 2022)

**INTERNATIONAL SEARCH REPORT**
**Information on patent family members**

International application No.

**PCT/KR2023/017974**

| Patent document cited in search report | | | Publication date (day/month/year) | Patent family member(s) | | | Publication date (day/month/year) |
|---|---|---|---|---|---|---|---|
| KR | 10-2021-0020685 | A | 24 February 2021 | CN | 112398331 | A | 23 February 2021 |
| | | | | DE | 102020107401 | A1 | 18 February 2021 |
| | | | | US | 11251708 | B2 | 15 February 2022 |
| | | | | US | 2021-0050786 | A1 | 18 February 2021 |
| KR | 10-0971131 | B1 | 20 July 2010 | KR | 10-2009-0117209 | A | 12 November 2009 |
| US | 2017-0279354 | A1 | 28 September 2017 | US | 9991794 | B2 | 05 June 2018 |
| US | 2014-0354349 | A1 | 04 December 2014 | CN | 103280967 | A | 04 September 2013 |
| | | | | CN | 103280967 | B | 16 November 2016 |
| | | | | TW | 201505337 | A | 01 February 2015 |
| | | | | TW | I527353 | B | 21 March 2016 |
| | | | | US | 9236796 | B2 | 12 January 2016 |
| KR | 10-2013-0026804 | A | 14 March 2013 | KR | 10-1267039 | B1 | 23 May 2013 |

Form PCT/ISA/210 (patent family annex) (July 2022)